# EUROPÄISCHE PATENTSCHRIFT

(11) **EP 2 820 636 B1**
(45) Veröffentlichungstag und Bekanntmachung des Hinweises auf die Patenterteilung: **10.04.2019**
(21) Anmeldenummer: 13706472.1
(22) Anmeldetag: 20.02.2013
(51) Int. Cl.: G08G 1/16, B60W 30/06

(54) **VERFAHREN ZUM AUTOMATISCHEN DURCHFÜHREN EINES FAHRMANÖVERS**
METHOD FOR AUTOMATICALLY CARRYING OUT A DRIVING MANEUVER
PROCÉDÉ D'EXÉCUTION AUTOMATIQUE D'UNE MAN UVRE DE CONDUITE

(30) Priorität: 01.03.2012 DE 102012203235
(43) Veröffentlichungstag der Anmeldung: 07.01.2015
(73) Patentinhaber: Robert Bosch GmbH, 70442 Stuttgart (DE)
(72) Erfinder: PAMPUS, Christian, 71229 Leonberg (DE); RAISCH, Florian, 71116 Gaertringen (DE)
(86) Internationale Anmeldenummer: PCT/EP2013/053330
(87) Internationale Veröffentlichungsnummer: WO 2013/127666

(56) Entgegenhaltungen:
- EP-A1- 1 361 458
- EP-A1- 2 295 281
- DE-A1-102008 019 346
- DE-A1-102010 030 483
- FR-A1- 2 785 383

## Beschreibung

Die Erfindung betrifft ein Verfahren zum automatischen Durchführen eines Fahrmanövers, bei dem in einem ersten Schritt die Umgebung des Kraftfahrzeugs erfasst wird und in einem zweiten Schritt anhand der erfassten Daten der Umgebung eine Trajektorie berechnet wird, entlang der das Kraftfahrzeug während des Fahrmanövers bewegt wird.

### Stand der Technik

Verfahren zur Unterstützung eines Fahrers eines Kraftfahrzeugs sind zum Beispiel Verfahren, die den Fahrer beim Einparken des Kraftfahrzeugs oder beim Befahren enger Straßen unterstützen. Die vorliegende Erfindung bezieht sich dabei insbesondere auf solche Verfahren, die den Fahrer bei einem Einparkmanöver in eine Parklücke oder bei Rangiermanövern unterstützen.

Bei Verfahren zur Unterstützung des Fahrers bei Fahrmanövern wird unterschieden zwischen semiautomatischen Verfahren und vollautomatischen Verfahren. Bei semiautomatischen Verfahren wird eine Trajektorie berechnet und dem Fahrer werden Anweisungen gegeben, wie dieser das Kraftfahrzeug zu bewegen hat, beispielsweise um entlang der Trajektorie in die Parklücke einzuparken. Demgegenüber wird bei vollautomatischen Systemen das Fahrmanöver vollständig vom Fahrassistenzsystem übernommen und das Kraftfahrzeug beispielsweise automatisch in die Parklücke eingeparkt.

Um das Kraftfahrzeug in die Parklücke zu bewegen, wird zunächst eine Bahn, entlang der das Kraftfahrzeug bewegt werden soll, eine so genannte Trajektorie oder ein sogenannter Fahrschlauch, berechnet. Zur Berechnung ist es notwendig, die Geometrie der Parklücke und die Position des Kraftfahrzeuges zu kennen. Die Geometrie der Parklücke wird dabei mit geeigneten Sensoren erfasst. Anhand der von den Sensoren erfassten Daten lässt sich eine Umgebungskarte des Kraftfahrzeuges erzeugen und eine geeignete Trajektorie in die Parklücke berechnen. Das Kraftfahrzeug wird dann entlang der Trajektorie in die Parklücke bewegt.

DE 10 2007 049 709 A1 hat eine Steuereinrichtung mit einem Verfahren zur Einparkunterstützung zum Gegenstand. Beschrieben ist ein automatisches Einparkverfahren, bei dem mit Hilfe von Abstandssensoren der Abstand zu Objekten in der Umgebung des Fahrzeugs erfasst wird. Wenn der gemessene Abstand eine vorgegebene Grenze unterschreitet, wird das durchgeführte Fahrmanöver unterbrochen. Sofern nach einer vorgegebenen Zeit kein Objekt mehr detektiert wird, wird dem Fahrer ein Hinweis gegeben, dass das Manöver fortgesetzt werden kann oder das Manöver wird automatisch fortgeführt.

DE 10 2008 014 969 A1 hat ein Verfahren zur Einparkunterstützung zum Gegenstand, bei dem während des Einparkens jeweils die aktuelle Position des Fahrzeugs vermessen wird und mit einem automatischen Lenkeingriff eine zuvor ermittelte Einparktrajektorie abgefahren wird. Wenn das Verfahren abgebrochen wird, zum Beispiel wenn eine vorgegebene Grenzgeschwindigkeit erreicht, beziehungsweise überschritten wird, besteht die Möglichkeit, dass das Verfahren anschließend mit Hilfe der zuvor berechneten Trajektorie wieder fortgesetzt wird. Hierzu muss der Fahrer jedoch die Anweisung zum Fortführen des Verfahrens geben.

DE 103 18 389 A1 beschreibt eine elektronische Einpark- und Rangierhilfe für Kraftfahrzeuge, bei der ein unterer Grenzwert für einen Abstand des Kraftfahrzeugs zu einem Hindernis an eine aktuelle Fahrsituation anpassbar ist. Sobald der untere Grenzwert unterschritten wird, wird in die Steuerung des Fahrzeugs eingegriffen und das Fahrzeug zum Beispiel angehalten. Dem Fahrer wird jederzeit die Möglichkeit gegeben, aktiv in das Geschehen einzugreifen und zum Beispiel trotz des Anhaltens aufgrund des Unterschreitens eines Grenzwertes das Fahrzeug weiter in die vorgegebene Richtung zu bewegen.

DE 10 2010 037 300 A1 hat ein Verfahren zum Einparken eines Fahrzeugmittels eines Einparkhilfesystems zum Gegenstand, bei dem nach dem Deaktivieren des Einparkhilfesystems durch eine Handlung des Fahrers und/oder des Beifahrers die Daten im Zeitpunkt der Deaktivierung gespeichert werden. Im Anschluss ergeht eine Anweisung, ob das Einparkmanöver fortgesetzt werden soll. Wenn eine Fortsetzung gewünscht wird, werden die gespeicherten Informationen verwendet, um das Fahrzeug weiterzuführen.

FR 2 785 383 A1 betrifft ein Verfahren und eine Vorrichtung zur Assistenz, insbesondere beim Parken eines Fahrzeugs. Zunächst wird eine Position zwischen zwei Hindernissen detektiert, welche einen Raum begrenzen, in Bezug auf eine Initialposition des Fahrzeugs. Es wird eine Trajektorie berechnet, entlang derer das Fahrzeug in eine Position innerhalb des Freiraums gelangt, als Funktion der Dimensionen des Freiraumes, der Dimensionen des Fahrzeugs und der Position des Fahrzeugs in Bezug auf Hindernisse sowie der Bremscharakteristik des Fahrzeugs. Besagte Trajektorie enthält sukzessive des Weges des Fahrzeugs, wobei zwei aufeinanderfolgende Phasen verschiedene Bremssituationen des Fahrzeugs repräsentieren. Die Bewegung des Fahrzeugs wird gestoppt oder verlangsamt, sobald dieses eine finale Position erreicht.

EP 2 295 281 A1 beschreibt eine Fahrassistenzeinrichtung für ein Fahrzeug und ein Verfahren zum Unterstützen eines Fahrers beim Überwachen eines autonomen Parkvorgangs eines Kraftfahrzeugs. Mit der Fahrassistenzeinrichtung erkennt der Fahrer eines Kraftfahrzeugs eine Gefahrsituation während eines autonomen Parkvorgangs des Kraftfahrzeugs. Eine Steuereinrichtung ist derart ausgelegt, dass Steuersignale an eine Antriebs- oder Lenkvorrichtung des Kraftfahrzeugs ausgegeben werden, die ein Durchführen eines autonom ablaufenden Parkvorgangs veranlassen. Die Steuereinrichtung ist auch dazu ausgelegt, Befehle von einer Fernbedienung zu empfangen und nach Empfangen eines vorbestimmten Unterbrechungsbefehles einen bereits begonnenen Parkvorgang des Kraftfahrzeugs zu unterbrechen. Zumindest eine Kamera ist mit der Steuereinrichtung gekoppelt und gewinnt Bilddaten über einen Umgebungsbereich des Kraftfahrzeugs.

DE 10 2008 019346 A1 zeigt ein Verfahren zum automatischen Ein- und Ausparken eines Fahrzeugs, wobei das Fahrzeug von einem Parksystem automatisch gesteuert wird. Dabei wird ein Parkvorgang, welcher automatisch durch das Parksystem durchgeführt wird und auch je nach Notwendigkeit einen oder mehrere Richtungswechsel umfassen kann, nur solange fortgesetzt, solange eine Stellvorrichtung von einem Fahrer des Fahrzeugs manuell, z. B. mittels eines Fußes oder mittels eines Fingers, in einer vorbestimmten Stellung gehalten wird. Wird die Stellvorrichtung nicht in der vorbestimmten Stellung gehalten, zum Beispiel da der Fahrer seinen Fuß oder seinen Finger von der entsprechenden Stellvorrichtung nimmt, wird das Fahrzeug insbesondere in einen sicheren Zustand versetzt, indem es beispielsweise automatisch gebremst wird.

### Offenbarung der Erfindung

Erfindungsgemäß ist ein Verfahren zum automatischen Durchführen eines Fahrmanövers mit einem Kraftfahrzeug vorgesehen, wobei die Umgebung des Kraftfahrzeugs mit einem Erfassungssystem erfasst wird, eine Trajektorie berechnet wird, entlang der das Kraftfahrzeug während des Fahrmanövers anhand der erfassten Umgebungsdaten bewegt wird, das Kraftfahrzeug entlang der Trajektorie zur Durchführung des Fahrmanövers bewegt wird und eine Option für eine partielle Freigabe des Fahrmanövers nach einer Unterbrechung des Fahrmanövers bereit gestellt wird.

Insbesondere ist vorgesehen, dass der Fahrer des Kraftfahrzeugs nach einer durch ein Fahrassistenzsystem oder durch den Fahrer ausgelösten Unterbrechung des Fahrmanövers eine partielle Freigabe des Fahrmanövers vorgeben kann. Nach der Wahl der Option der partiellen Freigabe des Fahrmanövers wird ein modifiziertes Fahrmanöver durchgeführt. Somit kann der Fahrer nach der Unterbrechung die Blockade aufheben.

### Vorteile der Erfindung

Die Erfindung ist besonders vorteilhaft in einer Situation, bei welcher ein Parkvorgang während der Vorbeifahrt an einer Parklücke durch Hindernisse blockiert wird, die von einem Fahrassistenzsystem, beispielsweise einem Kollisionsassistenten oder einem Parkassistenten, erkannt wurden. Für den Fall, dass der Parkvorgang aufgrund erkannter Hindernisse blockiert wird, wird eine Vollbremsung in den Stillstand des Fahrzeugs durchgeführt, d. h. der Parkvorgang unterbrochen. Die Erfindung ist auch besonders vorteilhaft in Situationen, bei welchen eine detektierte Parklücke besonders klein bemessen ist und nur durch optimale Ausnützung des verfügbaren Navigationsraums eine optimale Parkposition erreicht werden kann. Auch in diesen Situationen wird der Parkvorgang durch das Fahrassistenzsystem zunächst blockiert, d. h. eine Vollbremsung in den Stillstand des Fahrzeugs durchgeführt. Auch bei Rangieren auf engem Raum, insbesondere im Bereich öffentlicher Parkplätze oder enger Straßen ist die Erfindung anwendbar.

Nach einer Ausführungsform der Erfindung kann der Fahrer die erfindungsgemäße Option für eine partielle Freigabe des Fahrmanövers aus einem Menü auswählen, wobei das Menü auch eine vollständige Freigabe des Einparkmanövers und/oder einen vollständigen Abbruch des Parkmanövers umfasst. Ebenso mit Hilfe von Menüoptionen kann dabei vorgesehen sein, dass der Fahrer zwischen einem Fahrmanöver mit sehr niedriger Geschwindigkeit und einem Fahrmanöver mit Schritt-für-Schritt-Vortasten auswählen kann.

Nach einer Ausführungsform wird bei einer partiellen Freigabe des Fahrmanövers ein einmaliges Bewegen des Kraftfahrzeugs entlang der berechneten Trajektorie um eine kurze Distanz, von maximal 5 cm bis maximal 50 cm, bevorzugt maximal 10 cm bis maximal 20 cm, ausgeführt und das Kraftfahrzeug darauf hin in den Stillstand gebremst. Dieses Vortasten ist besonders vorteilhaft in Situationen, in denen auch ein Fahrer mit dem Rangieren Schwierigkeiten hätte, beispielsweise das Fahrzeug sehr nahe an realen Hindernissen vorbei oder an sie heran zu führen.

Alternativ dazu kann bei einer partiellen Freigabe des Fahrmanövers ein Bewegen des Kraftfahrzeugs entlang der Trajektorie bei einer niedrigen Geschwindigkeit, insbesondere zwischen 1 km/h und 6 km/h, ausgeführt werden. Der Vorgang bleibt damit jederzeit überschaubar und es besteht die Möglichkeit, ihn schnell abzubrechen.

Für die Durchführung des modifizierten Fahrmanövers sind spezielle Steuerungen vorteilhaft. Das einmalige Bewegen des Kraftfahrzeugs entlang der Trajektorie um die kurze Distanz mit dem darauf folgendem Stillstand des Kraftfahrzeugs wird bevorzugt durch ein einmaliges Drücken, einen Doppelklick oder durch ein Halten eines Schalters auf einem Steuergerät freigegeben.

Das Bewegen des Kraftfahrzeugs entlang der Trajektorie bei der niedrigen Geschwindigkeit wird bevorzugt durch ein unterbrechungsfreies Betätigen eines Schalters auf einem Steuergerät freigegeben. Hier wird bei einem Loslassen des Schalters das Kraftfahrzeug in den Stillstand gebremst. Um das Kraftfahrzeug zum Stillstand zu bremsen, wird beim Loslassen des Schalters ein Signal an den Fahrassistenten im Kraftfahrzeug gesendet, der das Fahrmanöver steuert. Der Fahrassistent im Kraftfahrzeug betätigt dann die Bremsen, um das Kraftfahrzeug anzuhalten.

Besonders vorteilhaft ist, wenn die Bremsung in den Stillstand eine nächste, zweite Unterbrechung des Fahrmanövers auslöst, nach welcher der Fahrer des Kraftfahrzeugs eine weitere, nicht unbedingt dieselbe, partielle Freigabe des Fahrmanövers vorgeben kann. Es ist also möglich, dass der Fahrer das Vortasten und das Bewegen des Kraftfahrzeugs bei der niedrigen Geschwindigkeit je nach Zweckmäßigkeit wieder und wieder ausführen kann, wobei das Bewegen des Kraftfahrzeugs bei der niedrigen Geschwindigkeit jederzeit unterbrechbar ist. Ein Vortasten kann so Schritt für Schritt erfolgen.

In einer Ausführungsform der Erfindung ist das Steuergerät ein portables Steuergerät. Bei Verwendung des portablen Steuergerätes ist es möglich, das Fahrmanöver auch von außerhalb des Kraftfahrzeugs durchzuführen. Der Fahrer muss während des Fahrmanövers nicht mehr notwendigerweise auf dem Fahrersitz sitzen. Damit der Fahrer oder ein anderer Benutzer das Fahrmanöver während seiner Durchführung überwachen kann, werden insbesondere auch während des Fahrmanövers die vom Erfassungssystem erfassten Daten an das portable Steuergerät übertragen. Hierbei ist es besonders bevorzugt, wenn die erfassten Daten in Form einer Umgebungskarte auf einer Anzeigevorrichtung des portablen Steuergeräts dargestellt werden. Als Anzeigevorrichtung eignet sich dabei jeder beliebige, dem Fachmann bekannte Monitor oder Touchscreen.

Um dem Fahrer des Kraftfahrzeugs zu ermöglichen, das Fahrmanöver auch außerhalb des Kraftfahrzeugs zu überwachen, werden die Daten an das portable Steuergerät bevorzugt drahtlos, beispielsweise über Funk, übertragen. Zur Datenübertragung eignen sich zum Beispiel Bluetooth oder WiFi.

Das Fahrmanöver, bei dem das erfindungsgemäße Verfahren durchgeführt wird, ist insbesondere ein Einparkmanöver. Das Einparkmanöver kann dabei entweder ein Einparkmanöver in eine Querparklücke oder ein Einparkmanöver in eine Längsparklücke oder in eine Garage sein. Das Einparkmanöver wird dabei bevorzugt von einem Parkassistenten gesteuert und ausgeführt, welcher ein semiautomatisches oder ein vollautomatisches Manöver durchführen kann.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einem USB-Stick. Zusätzlich oder alternativ kann das Computerprogramm auf einer Computereinrichtung wie etwa auf einem Server zum Herunterladen bereitgestellt werden, z.B. über ein Datennetzwerk wie das Internet oder eine Kommunikationsverbindung wie etwa eine Telefonleitung oder eine drahtlose Verbindung.

Eine erfindungsgemäßes Fahrassistenzsystem zur Durchführung des oben beschriebenen Verfahrens umfasst ein Erfassungssystem zur Erfassung der Umgebung des Kraftfahrzeugs, ein Modul zur Bestimmung einer Trajektorie, entlang der das Fahrmanöver durchgeführt wird, und ein insbesondere portables Steuergerät mit einem Schalter, der während des Fahrmanövers betätigbar ist und über den der Fahrer eine partielle Freigabe des Fahrmanövers vorgeben kann.

Es kann eine Überwachung mit mehreren verschiedenen Erfassungssystemen vorgesehen sein. Hierdurch wird eine zusätzliche Sicherheitsstufe eingebaut zur Überwachung der Umgebung des Kraftfahrzeugs während des Fahrmanövers. Die Sensorsysteme können unabhängig voneinander arbeiten oder es kann eine Datenfusion der Daten der verschiedenen Sensorsysteme erfolgen.

Als Erfassungssystem zur Erfassung der Umgebung des Kraftfahrzeuges werden üblicherweise Sensoren am Kraftfahrzeug eingesetzt. Diese befinden sich im Allgemeinen im Front- und im Heckbereich des Kraftfahrzeuges. Zusätzlich ist es auch möglich, an den Seiten des Kraftfahrzeuges weitere Sensoren vorzusehen. Sensoren, die zur Erfassung der Umgebung eingesetzt werden können, sind zum Beispiel Ultraschallsensoren, Infrarotsensoren, Radarsensoren oder LIDAR-Sensoren sowie optische Sensoren. Als optische Sensoren im Rahmen der vorliegenden Erfindung werden auch Kameras bezeichnet, deren erfasste Bilder mit einer Bildverarbeitungssoftware ausgewertet werden. Besonders bevorzugt als Sensoren des Erfassungssystems zur Erfassung der Umgebung des Kraftfahrzeugs sind Ultraschallsensoren.

Die Ultraschallsensoren zur Erfassung der Umgebung werden üblicherweise im vorderen und im hinteren Stoßfänger des Kraftfahrzeugs positioniert. Aufgrund der Einbaulage wird jedoch nur ein Bereich vor dem Kraftfahrzeug und hinter dem Kraftfahrzeug erfasst. Die Bereiche direkt neben dem Kraftfahrzeug können durch die Sensoren aufgrund ihrer Einbaulage nicht erfasst werden. Der Erfassungsbereich im Front- bzw. Heckbereich des Kraftfahrzeugs umfasst jedoch nicht nur den Bereich, der sich unmittelbar vor dem Kraftfahrzeug befindet, sondern erstreckt sich auch noch - in Abhängigkeit von der Reichweite der Sensoren - ein Stück weit nach links und rechts über die Seiten des Kraftfahrzeugs hinaus.

Insbesondere um auch den Bereich neben dem Kraftfahrzeug zu erfassen, werden im vorderen Stoßfänger Sensoren positioniert, die nach links und nach rechts ihren Erfassungsbereich haben. Zusätzlich oder alternativ können auch im hinteren Stoßfänger Sensoren derart positioniert sein, dass diese einen Bereich links und rechts neben dem Kraftfahrzeug erfassen.

Bei optischen Sensoren, insbesondere bei Kameras, wird zur Auswertung und zur Bestimmung des Abstandes eine Bildverarbeitungssoftware herangezogen. Die optischen Sensoren des Erfassungssystems sind dabei vorzugsweise im Frontbereich, im Heckbereich und seitlich am Kraftfahrzeug, zum Beispiel als SVA-Kameras oder im Bereich der Außenspiegel als SVS-Kameras oder BSD-Kameras, positioniert. Im Allgemeinen werden ein Videosensor im Frontbereich, vorzugsweise mittig, ein Videosensor im Heckbereich, ebenfalls vorzugsweise mittig, und jeweils ein Videosensor auf jeder Seite des Kraftfahrzeugs angeordnet. Die Videosensoren im Frontbereich und im Heckbereich können zum Beispiel im Bereich der Windschutzscheibe, beispielsweise in der Halterung des Innenspiegels und im Bereich der Heckscheibe positioniert sein. Bevorzugt werden die Videosensoren im Bereich der Stoßfänger angeordnet. Hierdurch ist es möglich, das gesamte Umfeld um das Kraftfahrzeug zu erfassen.

Aus den mit den Sensoren erfassten Daten lässt sich eine Umgebungskarte erstellen. In der Umgebungskarte sind jeweils die Umrisse von Objekten, die zum Beispiel eine Parklücke begrenzen, und Hindernisse erfasst. Anhand der Begrenzungen, die durch die Objekte gegeben sind, lässt sich ermitteln, ob die Umgebung geeignet ist, das Kraftfahrzeug darin zu navigieren. Wenn dies der Fall ist, wird eine Trajektorie bestimmt, entlang der das Kraftfahrzeug zu bewegen ist, um das Fahrmanöver, insbesondere das Einparkmanöver, durchzuführen.

Zur Erstellung der Umgebungskarte und zum Berechnen der Trajektorie wird üblicherweise ein Steuergerät eines Fahrassistenzsystems, beispielsweise ein Parkassistent eingesetzt. Dem Parkassistenten werden die von den Sensoren erfassten Daten übergeben, so dass der Parkassistent die Umgebungskarte erstellt. Alternativ ist es auch möglich, die Sensoren mit geeigneten Prozessoren zu versehen, so dass die Sensoren untereinander bereits die Umgebungskarte berechnen können. Aus den Daten der Umgebungskarte wird dann mit einer geeigneten Software, die im Parkassistenten hinterlegt ist, die Trajektorie bestimmt.

Mit Hilfe des Fahrassistenzsystems werden während des Fahrmanövers die Längsführung und/oder die Querführung des Kraftfahrzeugs gesteuert. Hierzu werden zum Beispiel die Bremsen des Kraftfahrzeugs, das Fahrpedal und die Lenkung angesteuert, um das Kraftfahrzeug zu beschleunigen, abzubremsen und zu lenken.

### Kurze Beschreibung der Zeichnungen

Es zeigen
- Figur 1: eine Einparksituation in eine Längsparklücke,
- Figur 2: eine weitere Einparksituation in eine Längsparklücke,
- Figur 3: eine weitere Einparksituation in eine Längsparklücke,
- Figuren 4a und 4b: eine Einparksituation in eine enge Garage,
- Figur 5: eine Einparksituation in eine enge Querparklücke und
- Figur 6: eine Einparksituation in eine enge Längsparklücke.

### Ausführungsformen der Erfindung

Eine Parklücke 1 wird üblicherweise seitlich von Objekten, beispielsweise von Fahrzeugen, Pfosten, Wänden oder Mauern oder auch Linien begrenzt. In der hier dargestellten Lage ist die Parklücke 1 von einem ersten Fahrzeug 3 frontseitig und heckseitig von einem zweiten Fahrzeug 5 begrenzt.

Bei einer Vorbeifahrt mit einem Kraftfahrzeug 7 wird die Umgebung des Kraftfahrzeugs 7 mit geeigneten Sensoren 9 eines Erfassungssystems erfasst. Als Sensoren für das Erfassungssystem eignen sich zum Beispiel Ultraschallsensoren, Infrarotsensoren, Radarsensoren, LIDAR-Sensoren oder optische Sensoren, beispielsweise Kameras.

Bei einem ausreichend langen Abstand zwischen zwei Objekten, beispielsweise zwischen den zwei Fahrzeugen 3, 5 wird von einer geeigneten Parklücke ausgegangen. Da der Abstand für eine Querparklücke kleiner ist als für eine Längsparklücke, ist es zum Beispiel möglich, dass vom Benutzer des Fahrassistenzsystems, im Allgemeinem dem Fahrer des Kraftfahrzeugs 7, vorgegeben wird, ob eine Querparklücke oder eine Längsparklücke gesucht wird. Wenn eine geeignete Parklücke 1 erfasst worden ist, wird anhand der erfassten Umgebungsdaten eine Umgebungskarte erstellt und eine Trajektorie 11 berechnet, entlang der das Kraftfahrzeug 7 in die Parklücke einparken kann. Die Trajektorie 11 beschreibt zum Beispiel den Weg, den der Mittelpunkt der Hinterachse des Kraftfahrzeugs 7 zurücklegt. Der vom Fahrzeug überstrichene Bereich 13, bzw. der durchfahrene Raum wird auch als Fahrschlauch bezeichnet und kann ebenfalls zur Beschreibung des Weges in die Parklücke 1 herangezogen werden. In Abhängigkeit von der Position des Kraftfahrzeugs 7 und der Geometrie der erfassten Parklücke 1 kann das Fahrmanöver einzügig oder mehrzügig durchgeführt werden. Bei einem mehrzügigen Fahrmanöver wechseln sich üblicherweise Vorwärtsfahrzüge und Rückwärtsfahrzüge ab.

Nach der Berechnung der Trajektorie 11 wird das Kraftfahrzeug 7 automatisch oder semiautomatisch entlang der Trajektorie 11 in die Parklücke 1 bewegt. Hierzu werden zum Beispiel mit einem Steuergerät im Kraftfahrzeug 7 das Fahrpedal, die Bremsen, das Getriebe, beziehungsweise die Gangwahl und die Lenkung des Kraftfahrzeugs 7 und/oder Anzeigeeinheiten für den Fahrer angesteuert.

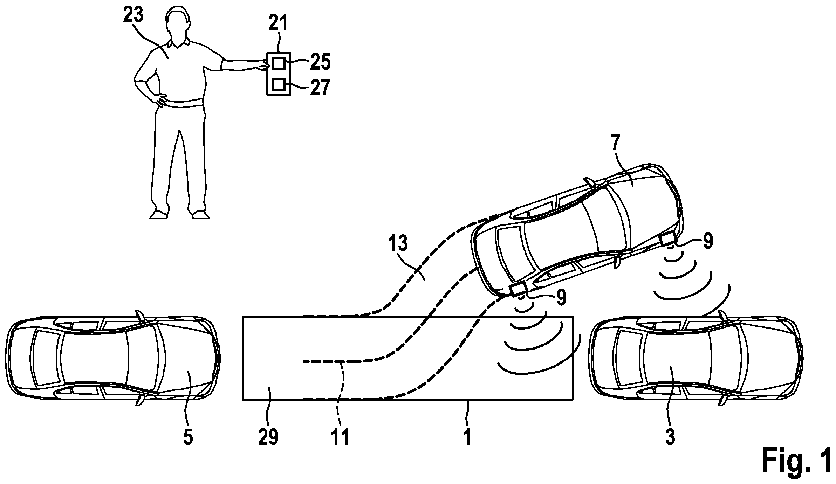

Die von den Sensoren 9 des Erfassungssystems erfassten Daten werden in der in Figur 1 dargestellten Ausführungsform an ein portables Steuergerät 21, beispielsweise ein Smartphone, übertragen, das von einem Bediener 23, üblicherweise dem Fahrer des Kraftfahrzeugs 7, betätigt wird. Das Steuergerät kann aber auch im Fahrzeug verbaut sein und dort vorhandene Head-up-Displays und/oder Head-down-Displays nutzen. Für den Fall, dass ein portables Steuergerät 21 verwendet wird, werden die Daten vorzugsweise drahtlos übertragen, sodass eine Überwachung nicht ortsgebunden erfolgen muss. Durch die drahtlose Übertragung ist es zum Beispiel möglich, dass das Fahrmanöver vom Fahrer auch außerhalb des Kraftfahrzeugs 7 überwacht wird. Hierzu weist das portable Steuergerät 21 vorzugsweise eine Anzeigevorrichtung 25 auf, auf der die von den Sensoren 9 des Erfassungssystems erfassten Daten in Form einer Umgebungskarte dargestellt werden. Über die Anzeigevorrichtung 25 kann sich der Fahrer über die aktuelle Situation informieren.

Die Umgebungskarte wird aus den erfassten Daten des Erfassungssystems berechnet und auf der Anzeigevorrichtung 25 des portablen Steuergeräts 21 dargestellt. Die Darstellung der Karte kann dann zum Beispiel in Form von Umrisslinien in Draufsicht erfolgen. Alternativ ist es bei einer Erfassung mit optischen Sensoren auch möglich, zum Beispiel direkt das erfasste Bild der optischen Sensoren anzuzeigen. Bevorzugt ist jedoch auch hier eine Berechnung einer Umgebungskarte und eine Darstellung in Draufsicht. Durch geeignete Bildauswertung bei optischen Sensoren ist es hier zum Beispiel möglich, die einzelnen von den optischen Sensoren erfassten Objekte zu klassifizieren und beispielsweise mit weiteren Informationen angereichert darzustellen. So können zum Beispiel für unterschiedliche Objekte verschiedene Symbole eingesetzt werden oder es erfolgt eine Beschriftung.

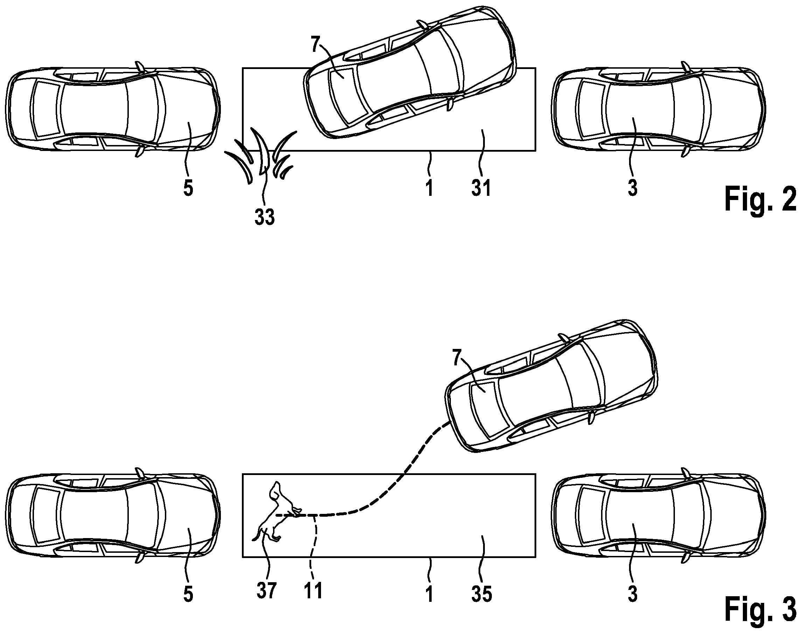

Zur Überwachung des Fahrmanövers weist das portable Steuergerät 21 einen Schalter 27 auf. Hierdurch kann der Fahrer 23 das Fahrmanöver gezielt unterbrechen, zum Beispiel, wenn plötzlich eine Gefahrensituation auftaucht, indem beispielsweise ein sich bewegendes Objekt in den zu befahrenden Bereich gelangt, wie in Figur 3 dargestellt. Alternativ dazu oder zusätzlich dazu kann das Fahrerassistenzsystem das Fahrmanöver gezielt unterbrechen, wenn plötzlich eine Gefahrensituation auftaucht.

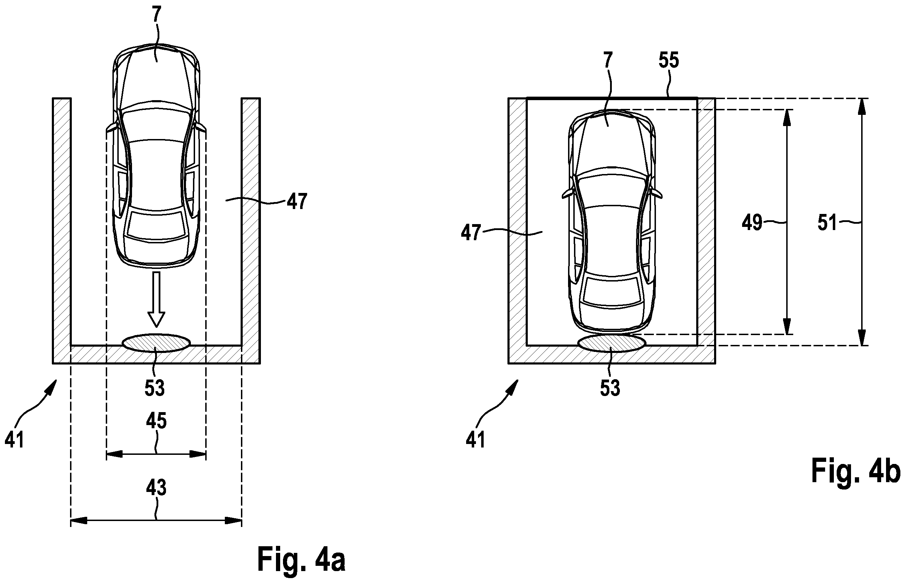

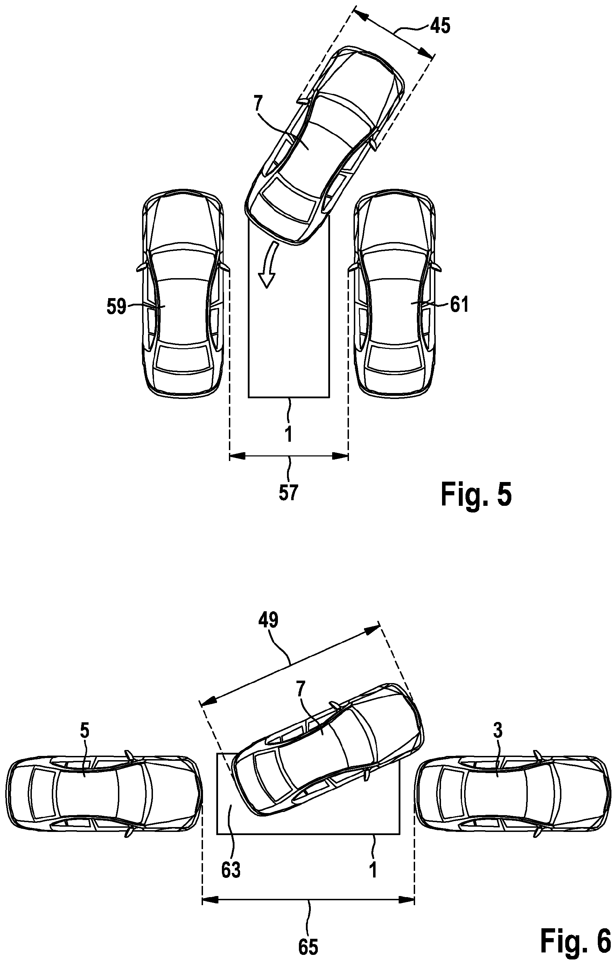

Der Fahrer des Kraftfahrzeugs 7, der das Fahrmanöver überwacht, kann während des Fahrmanövers im Kraftfahrzeug 7 sein oder außerhalb des Kraftfahrzeugs 7. Auch ist es möglich, dass der Fahrer das Fahrmanöver unterbricht, während der Unterbrechung aussteigt und das Fahrmanöver anschließend von außerhalb des Kraftfahrzeugs 7 weiter überwacht. Dies kann zum Beispiel dann sinnvoll sein, wenn die Parklücke 1, beispielsweise die in Figur 5 dargestellte Querparklücke oder die in den Figuren 4a und 4b dargestellte Garage, so schmal ist, dass der Fahrer nach dem Einparken das Kraftfahrzeug 7 nicht mehr verlassen kann, da sich die Türen nicht mehr weit genug öffnen lassen.

Das Verfahren eignet sich aufgrund der Möglichkeit für den Fahrer, das Fahrmanöver auch außerhalb des Kraftfahrzeugs 7 zu überwachen, insbesondere für Einparkmanöver. Neben Einparkmanövern können jedoch auch beliebige andere Fahrmanöver automatisch oder semiautomatisch durchgeführt werden, zum Beispiel Rangierfahrten oder Fahrten durch enge Gassen oder Straßen und insbesondere auch das Ausparken aus einer Parklücke, insbesondere aus einer engen Parklücke. Um das Fahrmanöver automatisch oder semiautomatisch durchführen zu können ist es dabei unabhängig vom geplanten Fahrmanöver notwendig, zunächst die Umgebung zu erfassen und anhand der erfassten Umgebung eine Trajektorie zu berechnen, entlang der das Fahrmanöver durchgeführt wird. Wenn nicht der gesamte während des Fahrmanövers zu befahrende Bereich erfasst werden kann, ist auch eine Durchführung des Fahrmanövers in einzelnen Abschnitten möglich. Hierbei wird jeweils für den bereits erfassten Bereich eine Trajektorie berechnet, während der Fahrt entlang der Trajektorie die Umgebung weiter erfasst und eine Verlängerung der Trajektorie bestimmt, bis das Fahrmanöver beendet worden ist. Bevorzugt ist es jedoch, die Umgebung, in der das Fahrmanöver durchgeführt werden soll, vollständig zu erfassen und die Trajektorie bis zum Erreichen des Zielpunktes auf einmal zu berechnen, wie dies für Einparkmanöver in Parklücken möglich ist.

Bei der in Figur 1 dargestellten Parksituation ist der zur Verfügung stehende Abstand zwischen dem vor dem Fahrzeug 7 geparkten Fahrzeug 3 und dem hinter dem Fahrzeug 7 geparkten Fahrzeug 5 zwar ausreichend groß, jedoch ist ein Untergrund 29 der Parklücke 1 derart strukturiert, dass er Bodenreflektionen erzeugt, die das Fahrassistenzsystem fälschlicherweise als Hindernis erkennt. Das Fahrassistenzsystem unterbricht den Einparkvorgang und tritt daraufhin mit dem Fahrer in Interaktion und fordert ihn auf, das Parkmanöver entweder partiell oder vollständig freizugeben oder ganz abzubrechen. Im vorliegenden Fall, wenn das Fahrassistenzsystem die Bodenreflektion fälschlich als Hindernis erkannt hat, könnte eine vollständige Freigabe durch den Fahrer sinnvoll sein. In diesem Fall wird das Fahrmanöver fortgesetzt. Da die Option für die partielle Freigabe des Fahrmanövers nach der Unterbrechung des Fahrmanövers vorgesehen ist, kann der Fahrer auch die partielle Freigabe wählen. Diese kann ein Fahrmanöver mit sehr niedriger Geschwindigkeit oder ein Fahrmanöver mit Schritt-für-Schritt-Vortasten umfassen, wobei die Alternativen bevorzugt in einer Auswahlliste dargestellt werden.

Wählt der Fahrer das einmalige Bewegen des Kraftfahrzeugs entlang der Trajektorie um eine kurze Distanz, so kann dies beispielsweise so ausgestaltet sein, dass er den Schalter 27 oder einen weiteren Schalter auf dem insbesondere portablen Steuergerät 21 einmalig drückt, doppelt anklickt oder über einen kurzen Zeitraum hält. Es kann vorgesehen sein, dass der Fahrer die kurze Distanz selbst festlegt oder diese aus einem Menü mit mehreren Distanzen, beispielsweise umfassend 5 cm, 10 cm, 20 cm und 50 cm, auswählen kann oder es kann eine Voreinstellung für das Maß der kurzen Distanz vorgesehen sein. Auf die Bewegung um die kurze Distanz erfolgt ein Stillstand des Kraftfahrzeugs. Das Fahrerassistenzsystem betätigt die Bremsen und löst ggf. den Gang, um das Kraftfahrzeug anzuhalten. Hiernach ist bevorzugt vorgesehen, dass das Fahrerassistenzsystem wiederum mit dem Fahrer in Interaktion tritt und ihn auffordert, das Parkmanöver entweder partiell oder vollständig freizugeben oder abzubrechen.

Das Bewegen des Kraftfahrzeugs entlang der Trajektorie 11 bei der niedrigen Geschwindigkeit erfolgt bevorzugt durch ein unterbrechungsfreies Betätigen des Schalters 27 oder eines weiteren Schalters auf dem portablen Steuergerät 21. Bei einem Loslassen des Schalters 27 wird das Kraftfahrzeug 7 in den Stillstand gebremst. Um das Kraftfahrzeug zum Stillstand zu bremsen, wird beim Loslassen des Schalters 27 ein Signal an den Parkassistenten im Kraftfahrzeug gesendet, der das Fahrmanöver steuert. Das Fahrerassistenzsystem betätigt dann die Bremsen und löst ggf. den Gang, um das Kraftfahrzeug anzuhalten. Hiernach ist ebenfalls vorgesehen, dass das Fahrerassistenzsystem wiederum mit dem Fahrer in Interaktion tritt und ihn auffordert, das Parkmanöver entweder partiell oder vollständig freizugeben oder abzubrechen.

Figur 2 zeigt eine Einparksituation mit einer Längsparklücke 1, deren Parkfläche 31 zum Teil von einem weichen Hindernis, hier als eine Pflanze 33 dargestellt, blockiert ist, sodass das Fahrerassistenzsystem den Einparkvorgang abbricht. Das Fahrerassistenzsystem zeigt dem Fahrer, bevorzugt über das hier nicht dargestellte portable Steuergerät oder Cockpitgeräte, die Optionen an, die der Fahrer wählen kann. In der vorliegenden Situation mit der Pflanze 33 kann der Fahrer beispielsweise die vollständige Freigabe veranlassen, d. h. rückmelden, dass die Bremsung nicht berechtigt ist und die Führung fortgesetzt werden kann, als gäbe es das Objekt nicht, das zum Einbremsen geführt hat. Alternativ dazu kann eine partielle Freigabe wie mit Bezug auf Figur 1 beschrieben ausgeführt werden, wobei hier außerdem vorgesehen sein kann, dass nach Feststellung, dass die Pflanze 33 mit dem Fahrzeug 7 kollidiert ist und überfahren wurde, die normale Einparkführung wieder aufgenommen wird. In diesem Fall kann das Fahrassistenzsystem zuverlässig davon ausgehen, dass keine kritische Situation mit dem erkannten Hindernis mehr vorliegt.

Figur 3 zeigt eine Situation eines Einparkvorgangs in eine Längsparklücke 1, deren Parkfläche 35 durch ein bewegliches Hindernis temporär blockiert ist, hier beispielhaft dargestellt durch einen Hund 37. Das sich bewegende Objekt kann insbesondere auch ein Fußgänger oder ein Radfahrer sein, der den vorgesehenen Weg 11 des Kraftfahrzeuges 7 kreuzt. Durch das erkannte Hindernis wird der automatische oder halbautomatische Einparkvorgang unterbrochen. Der Fahrer kann optional die partielle Freigabe oder eine vollständige Freigabe auswählen oder das Fahrmanöver abzubrechen.

Bei Objekten, die nur temporär den Fahrschlauch blockieren und sich anschließend wieder entfernen, kann durch eine entsprechende Erkennung des Bewegungsvektors und eine Prädiktion der Bewegung querender Objekte auch eine Freigabe durch das Fahrassistenzsystem erfolgen. Alternativ kann aber auch vorgesehen sein, dass aus Sicherheitsgründen eine partielle oder vollständige Freigabe zwangsläufig durch den Fahrer erfolgen muss. Nach einer alternativen Ausführungsform der Erfindung ist in Situationen mit beweglichen Hindernissen aus Sicherheitsgründen nur die partielle Freigabe möglich und eine vollständige Freigabe ausgeschlossen.

Figuren 4a und 4b zeigen einen Einparkvorgang in eine enge Garage 41. Eine Breite 43 einer Parkfläche 47 in der Garage 41 ist unwesentlich breiter als eine Breite 45 des Fahrzeugs 7. Auch eine Länge 51 der Parkfläche 47 in der Garage 41 ist unwesentlich größer als eine Länge 49 des Fahrzeugs 7. Die Situation liegt typischerweise in Ballungsräumen vor, wenn der zur Verfügung stehende Parkplatz teuer und eng bemessen ist. In manchen Garagen 41 ist vorgesehen, dass das Fahrzeug 7 heckseitig an eine Polsterung 53 anstößt, die am hinteren Ende der Garage 41 angeordnet ist. Vorderseitig schließt eine Tür oder ein Tor 55, sodass das Fahrzeug 7 gerade noch in der Parklücke 47 Platz findet. Die Umgebungskarte mit Bemessungen der Garage wird aus den erfassten Daten des Erfassungssystems berechnet. Hieraus kann das Fahrassistenzsystem erkennen, dass eine kritische Situation vorliegt, in der ein sehr genaues Navigieren erforderlich ist. Das Fahrassistenzsystem schlägt daher auch in solchen Situationen dem Fahrer vor, das Einparkmanöver nur partiell freizugeben, wie mit Bezug auf die Figuren 1 bis 3 beschrieben wurde. Bei der engen Garage 41 ist die Verwendung eines portablen Steuergeräts, welches mit Bezug auf die Figur 1 beschrieben wurde, besonders vorteilhaft, da dies dem Fahrer ermöglicht, den Vorgang von außerhalb des Kraftfahrzeugs 7 zu steuern und zu überwachen.

Figur 5 zeigt eine Parksituation mit einer engen Querparklücke 32, d.h. eine Parklücke, bei welcher ein Abstand 57 zwischen zwei nebeneinander parkenden Fahrzeugen 59, 61 geringfügig größer ist als die Breite 45 des Fahrzeugs 7. Die Situation stellt den Fahrer des Fahrzeugs beim eigenständigen Rangieren vor Probleme, da er sehr nahe an den Fahrzeugen 59, 61 vorbei navigieren muss. In diesem Fall kann das Fahrassistenzsystem feststellen, dass eine kritische Situation vorliegt und dem Fahrer vorschlagen, das Fahrmanöver nur partiell freizugeben, wie oben beschrieben.

Figur 6 zeigt eine Parksituation mit einer engen Längsparklücke 1, d.h. eine Parklücke 1, bei welcher die Parkfläche 63 so bemessen ist, dass der lichte Abstand 65 zwischen dem vor dem Fahrzeug 7 geparkten Fahrzeug 3 und dem hinter dem Fahrzeug 7 geparkten Fahrzeug 5 nur geringfügig größer als die Länge 49 des Fahrzeugs 7 ausgebildet ist. Auch in diesem Fall eine Option für eine partielle Freigabe des Fahrmanövers nach einer Unterbrechung des Fahrmanövers vorgesehen.

In den mit Bezug auf Figuren 4 bis 6 beschriebenen Situationen, bei welchen die Parklücke 1 bzw. die Parkfläche 47, 57, 63 für sehr oder zu eng bemessen beurteilt wurde, kann es sinnvoll sein, dem Fahrer zusätzlich zur Option der partiellen Freigabe die Option bereitzustellen, das Einparkmanöver so durchzuführen, als wenn eine Parklücke oder Parkfläche mit gewöhnlichen Maßen vorläge. Somit ist der Fahrer nicht zwangsläufig daran gebunden, eine langsame oder vorsichtige Manövrierung zu verwenden, sondern es kann beispielsweise dann, wenn das Parkmanöver schon oft, wie etwa in der Heimatgarage, erfolgreich durchgeführt wurde, und sich absehen lässt, dass keine kritische Situation im eigentlichen Sinn vorliegt, ein normaler automatischer oder semiautomatischer Parkvorgang ausgeführt werden. Ebenso kann beispielsweise bei Zeitmangel der normale Parkvorgang ausgeführt werden, wobei der Fahrer dann das Risiko für seine Entscheidung trägt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Durchführen eines Fahrmanövers mit einem Kraftfahrzeug (7), folgende Schritte umfassend:
(a) Erfassen der Umgebung des Kraftfahrzeugs (7) mit einem Erfassungssystem (9),
(b) Berechnen einer Trajektorie (11), entlang der das Kraftfahrzeug (7) während des Fahrmanövers bewegt wird, anhand der in Schritt (a) erfassten Umgebungsdaten,
(c) Bewegen des Kraftfahrzeugs (7) entlang der Trajektorie (11) zur Durchführung des Fahrmanövers,
(d) Unterbrechen des Fahrmanövers durch ein Fahrassistenzsystem, wenn eine Gefahrensituation auftaucht,
(e) Bereitstellen einer Option für eine partielle Freigabe des Fahrmanövers nach der Unterbrechung des Fahrmanövers.

2. Verfahren gemäß Anspruch 1, **dadurch gekennzeichnet, dass** bei der partiellen Freigabe des Fahrmanövers ein einmaliges Bewegen des Kraftfahrzeugs (7) entlang der Trajektorie (11) um eine kurze Distanz, von maximal zwischen 5 cm bis maximal 50 cm ausgeführt wird und das Kraftfahrzeug (7) darauf hin in den Stillstand gebremst wird.

3. Verfahren gemäß Anspruch 2, **dadurch gekennzeichnet, dass** das einmalige Bewegen des Kraftfahrzeugs (7) entlang der Trajektorie (11) um die kurze Distanz mit dem darauf folgendem Stillstand des Kraftfahrzeugs (7) durch ein einmaliges Drücken, einen Doppelklick oder durch ein Halten eines Schalters (27) auf einem Steuergerät (21) freigegeben wird.

4. Verfahren gemäß Anspruch 1, **dadurch gekennzeichnet, dass** bei der partiellen Freigabe des Fahrmanövers ein Bewegen des Kraftfahrzeugs (7) entlang der Trajektorie (11) bei einer niedrigen Geschwindigkeit zwischen 1 km/h und 6 km/h ausgeführt wird.

5. Verfahren gemäß Anspruch 4, **dadurch gekennzeichnet, dass** das Bewegen des Kraftfahrzeugs (7) entlang der Trajektorie (11) bei der niedrigen Geschwindigkeit durch ein unterbrechungsfreies Betätigen eines Schalters (27) auf einem Steuergerät (21) freigegeben wird und bei einem Loslassen des Schalters (27) das Kraftfahrzeug (7) in den Stillstand gebremst wird.

6. Verfahren gemäß Anspruch 3 oder 5, **dadurch gekennzeichnet, dass** die Bremsung des Kraftfahrzeugs (7) in den Stillstand eine nächste Unterbrechung des Fahrmanövers auslöst, nach welcher der Fahrer des Kraftfahrzeugs (7) eine weitere partielle Freigabe des Fahrmanövers vorgeben kann.

7. Verfahren gemäß einem der Ansprüche 3, 5 oder 6, **dadurch gekennzeichnet, dass** das Steuergerät (21) ein portables Steuergerät ist.

8. Verfahren gemäß einem der Ansprüche 1 bis 7, **dadurch gekennzeichnet, dass** das Fahrmanöver ein Einparkmanöver ist.

9. Computerprogramm zur Durchführung eines der Verfahren nach einem der Ansprüche 1 bis 8, wenn das Computerprogramm auf einer programmierbaren Computereinrichtung ausgeführt wird.

10. Fahrassistenzsystem zur Durchführung eines der Verfahren nach einem der Ansprüche 1 bis 8, umfassend
- ein Erfassungssystem (9) zur Erfassung der Umgebung des Kraftfahrzeugs (7),
- ein Modul zur Bestimmung einer Trajektorie (11), entlang der das Fahrmanöver durchgeführt wird, und
- ein Steuergerät (21) mit einem Schalter (27), der während des Fahrmanövers betätigbar ist und über den der Fahrer eine partielle Freigabe des Fahrmanövers vorgeben kann.

## Claims

1. Method for carrying out a driving manoeuvre with a motor vehicle (7), comprising the following steps:
(a) sensing the surroundings of the motor vehicle (7) with a sensing system (9),
(b) calculating a trajectory (11) along which the motor vehicle (7) is moved during the driving manoeuvre, on the basis of the surroundings data sensed in step (a),
(c) moving the motor vehicle (7) along the trajectory (11) in order to carry out the driving manoeuvre,
(d) interrupting the driving manoeuvre by means of a driving assistance system if a hazardous situation arises, and
(e) making available an option for partial enabling of the driving manoeuvre after the interruption of the driving manoeuvre.

2. Method according to Claim 1, **characterized in that** during the partial enabling of the driving manoeuvre a one-time movement of the motor vehicle (7) is executed along the trajectory (11) by a short distance of at maximum between 5 cm to at maximum 50 cm, and the motor vehicle (7) is subsequently braked to the stationary state.

3. Method according to Claim 2, **characterized in that** the one-time movement of the motor vehicle (7) along the trajectory (11) by the short distance with the subsequent stationary state of the motor vehicle (7) is enabled by one-time pressing, a double click or by holding a switch (27) on a control device (21).

4. Method according to Claim 1, **characterized in that** during the partial enabling of the driving manoeuvre a movement of the motor vehicle (7) is executed along the trajectory (11) at a low speed between 1 km/h and 6 km/h.

5. Method according to Claim 4, **characterized in that** the movement of the motor vehicle (7) along the trajectory (11) at the low speed is enabled by interruption-free actuation of a switch (27) on a control device (21), and when the switch (27) is released, the motor vehicle (7) is braked to the stationary state.

6. Method according to Claim 3 or 5, **characterized in that** the braking of the motor vehicle (7) to the stationary state triggers subsequent interruption of the driving manoeuvre after which the driver of the motor vehicle (7) can predefine further partial enabling of the driving manoeuvre.

7. Method according to one of Claims 3, 5 or 6, **characterized in that** the control device (21) is a portable control device.

8. Method according to one of Claims 1 to 7, **characterized in that** the driving manoeuvre is a parking manoeuvre.

9. Computer program for carrying out one of the methods according to one of Claims 1 to 8 when the computer program is executed on a programmable computer device.

10. Driving assistance system for carrying out one of the methods according to one of Claims 1 to 8, comprising
- a sensing system (9) for sensing the surroundings of the motor vehicle (7),
- a module for determining a trajectory (11) along which the driving manoeuvre is carried out, and
- a control device (21) with a switch (27) which can be activated during the driving manoeuvre and by means of which the driver can predefine partial enabling of the driving manoeuvre.

## Revendications

1. Procédé d'exécution d'une manoeuvre de conduite avec un véhicule automobile (7), comprenant les étapes suivantes:
(a) saisie de l'environnement du véhicule automobile (7) à l'aide d'un système de saisie (9),
(b) à l'aide des données d'environnement saisies à l'étape (a), calcul d'une trajectoire (11) le long de laquelle le véhicule automobile (7) sera déplacé pendant la manoeuvre de conduite,
(c) déplacement du véhicule automobile (7) le long de la trajectoire (11) en vue d'exécuter la manoeuvre de conduite,
(d) interruption de la manoeuvre de conduite par un système d'aide à la conduite, lorsqu'une situation dangereuse apparaît,
(e) fourniture d'une option pour une autorisation partielle de la manoeuvre de conduite après l'interruption de la manoeuvre de conduite.

2. Procédé selon la revendication 1, **caractérisé en ce que** lors de l'autorisation partielle de la manoeuvre de conduite on exécute un unique déplacement du véhicule automobile (7) le long de la trajectoire (11) sur une courte distance, de maximum 5 cm à maximum 50 cm, et on freine ensuite le véhicule automobile (7) jusqu'à l'arrêt.

3. Procédé selon la revendication 2, **caractérisé en ce que** le déplacement unique du véhicule automobile (7) le long de la trajectoire (11) sur la courte distance avec ensuite l'arrêt du véhicule automobile (7) est autorisé par une pression unique, un double clic ou par un maintien d'un commutateur (27) sur un appareil de commande (21).

4. Procédé selon la revendication 1, **caractérisé en ce que** lors de l'autorisation partielle de la manoeuvre de conduite on exécute un déplacement du véhicule automobile (7) le long de la trajectoire (11) à une faible vitesse comprise entre 1 km/h et 6 km/h.

5. Procédé selon la revendication 4, **caractérisé en ce que** le déplacement du véhicule automobile (7) le long de la trajectoire (11) à ladite faible vitesse est autorisé par un actionnement ininterrompu d'un commutateur (27) sur un appareil de commande (21) et le véhicule automobile (7) est freiné jusqu'à l'arrêt lorsque le commutateur (27) est relâché.

6. Procédé selon la revendication 3 ou 5, **caractérisé en ce que** le freinage du véhicule automobile (7) jusqu'à l'arrêt déclenche une interruption imminente de la manoeuvre de conduite, après laquelle le conducteur du véhicule automobile (7) peut ordonner une autre autorisation partielle de la manoeuvre de conduite.

7. Procédé selon une des revendications 3, 5 ou 6, **caractérisé en ce que** l'appareil de commande (21) est un appareil de commande portable.

8. Procédé selon l'une quelconque des revendications 1 à 7, **caractérisé en ce que** la manoeuvre de conduite est une manoeuvre de stationnement.

9. Programme informatique pour l'exécution d'un des procédés selon l'une quelconque des revendications 1 à 8, lorsque le programme informatique est exécuté sur un dispositif informatique programmable.

10. Système d'aide à la conduite pour l'exécution d'un des procédés selon l'une quelconque des revendications 1 à 8, comprenant:
- un système de saisie (9) pour la saisie de l'environnement du véhicule automobile (7),
- un module pour la détermination d'une trajectoire (11), le long de laquelle la manoeuvre de conduite sera exécutée, et
- un appareil de commande (21) avec un commutateur (27), qui peut être actionné pendant la manoeuvre de conduite et par lequel le conducteur peut ordonner une autorisation partielle de la manoeuvre de conduite.
